# EUROPEAN PATENT SPECIFICATION

(11) **EP 4 330 063 B1**
(45) Date of publication and mention of the grant of the patent: **10.12.2025**
(21) Application number: 22726288.8
(22) Date of filing: 26.04.2022
(51) Int. Cl.: B60G 13/08, B29C 70/44, G01L 1/24, G01D 5/353, B60G 17/018, B60G 17/0185, B29C 70/30, B60G 17/019

(54) **A CYLINDRICAL ELEMENT MADE OF A COMPOSITE MATERIAL FOR A DAMPER DEVICE**
ZYLINDRISCHES ELEMENT AUS EINEM VERBUNDWERKSTOFF FÜR EINE DÄMPFERVORRICHTUNG
ÉLÉMENT CYLINDRIQUE EN MATÉRIAU COMPOSITE POUR DISPOSITIF AMORTISSEUR

(30) Priority: 27.04.2021 IT 202100010649
(43) Date of publication of application: 06.03.2024
(73) Proprietor: Politecnico di Milano, 20133 Milano (IT)
(72) Inventor: BETTINI, Paolo, 20156 MILANO (IT); RIGAMONTI, Daniela, 20156 MILANO (IT); SCIAMÉ, Gabriele, 20156 MILANO (IT)
(74) Representative: Cevini, Gaia
(86) International application number: PCT/IB2022/053838
(87) International publication number: WO 2022/229825

(56) References cited:
- CN-A- 111 257 993
- CN-B- 107 687 817
- DE-A1- 102016 223 230
- FR-A1- 2 983 954
- US-A1- 2019 016 065

## Description

### Technical sector

The present invention relates to components for suspension/damping systems. In particular, the present invention relates to a cylindrical element for a damper device for an aircraft or vehicle, such as a motorcycle, a bicycle or a motorcar, to a damper device comprising such a cylindrical element as a structural element thereof, and to a method of manufacturing said cylindrical element.

### Prior art

As known, damper devices for vehicles or aircraft, be they of the hydraulic or of the pneumatic type, comprise a first cylindrical element, commonly called a fork tube, which is generally filled with a viscous fluid, such as oil, and inside which there is a sliding piston integral with a second cylindrical element or stem in turn connected to the vehicle chassis. In a vehicle, for example, the damper has the function of absorbing the oscillations of the vehicle suspension namely of the wheel to which, as known, it is connected. In particular, in a motorcycle, the front fork comprises a pair of dampers which connect the axle of the front wheel to the steering tube of the chassis and have the function of absorbing the oscillations due to contact of the front wheel with the ground, determining the response of the motorcycle to the maneuvers performed by the rider.

Damper devices are commonly used also in the aeronautical sector, for example for damping the undercarriages of aircraft, in the industrial sector, for example for damping the support structures of machinery, or in the building sector, for example in systems for providing isolation from the vibrations which may be applied to structures such as buildings or bridges.

It is also known to use composite materials for vehicle structural elements, such as the frame of a bicycle, or for aeronautical structural components, in the bodies of motor vehicles, or also for components in the naval sector, owing to the optimum mechanical properties and lightness of these materials. Known composite materials used for these types of applications may comprise a polymer matrix, for example made of epoxy resin, reinforced with continuous fibers, for example carbon fibers.

Some of these applications are described in the documents cited below.

US7574074 describes a method for detecting cracks in a carbon fiber bicycle frame using an embedded optical fiber. Optical time-domain reflectometry is employed to detect cracks in a bicycle frame made of carbon fibers intertwining with a single-mode optical fiber. The single-mode optical fiber is thus embedded into the bicycle frame and consolidated with the carbon fibers during a manufacturing process of the bicycle frame. Integration of the single-mode optical fiber, which has a small diameter, low cost and lightweight, into the bicycle frame adds little to a production cost and weight of the bicycle frame. The optical fiber consolidated within the bicycle frame can be connected with an optical time-domain reflectometer for efficiently detecting twists or cracks of the carbon fibers in the bicycle frame, both as a quality check in the manufacturing process and as a safety check after the bicycle frame has been used for some time.

US 9,589,707 B2 describes a composite bicycle frame which comprises of a main frame including interconnected tubes and substantially composed of a composite material and having a composite layup structure. At least one electric wire electrically interconnects electrical components mounted to or in the frame. The at least one electric wire is embedded in the composite material structure forming the composite main frame. The electric wire has connectable conductive ends at each of the opposed ends thereof.

KR 102018195 B1 describes a bicycle monitoring system, with which is possible to monitor deformation or damage to a bicycle frame during driving or non-driving of a bicycle. The bicycle monitoring system of the present invention includes: one or more optical fibers inserted thereinto or attached to an outer surface of one side along a longitudinal direction of a bicycle frame forming a frame of the bicycle; one or more optical fiber Bragg grating sensors provided to form a Bragg grating on the optical fiber and reflect only a wavelength corresponding to the grating; and a control unit determining whether the bicycle frame is deformed or damaged through a change of the wavelength reflected from the optical fiber Bragg grating sensor.

DE 10 2016 223230 A1 discloses a monitoring arrangement for motor vehicles, in particular for passenger cars, buses and trucks, with a sensor arrangement for detecting thermal and/or mechanical loads on at least one component of a chassis and/or undercarriage of an underlying motor vehicle and for outputting signals representative of the loads and with a detection and evaluation unit for receiving and evaluating signals output by the sensor arrangement, wherein the sensor arrangement has an optical waveguide with a fiber Bragg grating sensor integrated in the optical waveguide and wherein the fiber Bragg grating sensor is designed to be partially or completely integrated in or on the component of the chassis and/or the undercarriage of the motor vehicle in order to detect thermally and/or mechanically induced loads in the component of the chassis and/or the chassis.

FR 2 983 954 A1 discloses a spring comprising a composite structure comprising reinforcing fibers in a matrix. Furthermore, the composite structure comprises at least one Bragg cell and at least one optical fiber connected to the Bragg cell.

### Summary of the invention

The inventors have noted that a damper device comprising structural elements (namely the fork tube and/or stem) made of composite material may be provided with a monitoring system (a so-called "Health and Usage Monitoring System" or HUMS) which is able to obtain in real time data about the state of deformation of the structural elements of the said device. Based on the state of deformation of these elements it is possible to derive information both regarding the integrity and the "state of health" and use of the device, as well as information about the stresses affecting the said damper device. The inventors have therefore noted that it is possible to sensorize at least one of the structural elements of a damper device by providing it with the aforementioned monitoring system. This system may be realized by means of a number of sensors based on the transmission of light in one or more optical fibers embedded in the composite material and in particular embedded between the layers of this material during the lay-up process and by means of measures which allow acquisition of the data detected by the sensors in a quick and efficient manner, for example by simply connecting the fiber to a data acquisition unit in "plug and play" mode. The inventors have noted that different types of sensors are based on the transmission of light in optical fiber, being adaptable to different measurement requirements. Some examples of sensors are: FBG (Fiber Bragg Grating) sensors and LPG (Long Period Grating) sensors for a point or quasi-distributed measurement with many measurement points on the same fiber; scattering type sensors (Reyleigh, Brillouin or Raman sensors) for a distributed measurement over the whole length of a fiber (km); interferometric sensors for an integral measurement along one or more optical fiber sections (from mm to several tens of meters). The inventors have noted that it is particularly advantageous for this sensorized damper device to be autonomous, namely that it may be produced directly as an independent monitored element which is disconnected from the other parts of the frame. This represents a technical advantage since it facilitates production of the sensorized damper device, maintenance thereof and, if necessary, replacement of the device itself. At the same time the inventors have noted that it is required to minimize the invasiveness of the optical fiber in the device (namely, for example, avoid the presence of joints, which would be too voluminous) in order to limit the dimensions and the lightness of the device and avoid causing possible damages in the structure.

The Applicant has therefore considered the problem of providing a cylindrical element for a damper device, made of composite material and provided with an integrated monitoring system based on optical fiber by means of which it is possible obtain in real time data about the state of the device and at the same time minimize the invasiveness of the optical fiber in the device itself.

According to a first aspect, the present invention relates to a cylindrical element for a damper device comprising:
- a cylindrical body made of a composite material;
- a monitoring system configured to provide monitoring data indicating the state of the cylindrical element, the monitoring system comprising an optical fiber connected, at one end, to a connection apparatus for connecting the optical fiber to an acquisition unit for acquiring the monitoring data;
- a protective housing configured to house at least the connection apparatus;
wherein the monitoring system and the protective housing are embedded in the composite material.

According to an embodiment of the invention, the monitoring system comprises a number of deformation sensors in the optical fiber. In particular, the sensors may be FBG type sensors.

Preferably, the optical fiber comprises a coating of a material resistant to high temperatures, i.e., in particular, resistant to the temperatures of the polymerization cycles which the composite material undergoes, typically temperatures higher than 120°C.

According to embodiments of the present invention, the connection apparatus comprises an optical connector and an adapter.

According to embodiments of the present invention, the protective housing comprises an at least partially hollow body and a cap for closing the body. The removal of this cap allows a portion of the connection apparatus to be exposed for connecting external devices and cables.

According to an advantageous embodiment, the protective housing comprises an at last partially hollow body, a main cap and a secondary cap, wherein the main cap has preferably a hole for exposing a portion of the connection apparatus useful for connecting an external device or cable, and wherein the secondary cap is configured to close the hole.

Preferably, the protective housing is made of polymeric material.

According to an embodiment of the present invention, the protective housing is also configured to house the acquisition unit in miniaturized form.

According to a second aspect, the present invention relates to a damper device comprising a cylindrical element as described above.

According to a third aspect, the present invention relates to a method of manufacturing a cylindrical element for a damper device, comprising the steps of:
a) providing a monitoring system for the cylindrical element, the monitoring system being configured to provide monitoring data indicating the state of the cylindrical element and comprising an optical fiber, wherein the monitoring system is connected, at one end of the optical fiber, to a connection apparatus for connecting the optical fiber to an acquisition unit for acquiring the monitoring data;
b) assembling the monitoring system, connected to the connection apparatus, with a protective housing configured to house at least the connection apparatus;
c) depositing on a cylindrical mandrel a first number of layers of composite material to obtain a first semi-finished cylindrical element;
d) positioning the monitoring system, connected to the connection apparatus and assembled with the protective housing, on the first semi-finished cylindrical element;
e) depositing a second number of layers of composite material to obtain a second semi-finished cylindrical element wherein the monitoring system, connected to the connection apparatus, and the protective housing are embedded in the composite material; and
f) carrying out a polymerization of the second semi-finished cylindrical element to obtain the cylindrical element.

Preferably, the layers are pre-impregnated layers of a thermosetting composite material with a carbon-fiber reinforced polymer matrix.

According to embodiments of the present invention, in step c), the last deposited layer of the first number of layers consists of unidirectional fibers. These fibers, in particular, have the same orientation as the longitudinal axis of the optical fiber along the sections where the aforementioned FBG sensors are embedded in the said fiber.

According to embodiments of the present invention, step d) further comprises fixing the optical fiber to the first semi-finished element by means of fixing rectangles made of pre-impregnated composite material applied onto the optical fiber. The material used is preferably the same material used for the last deposited layer.

According to embodiments of the present invention, step d) may comprise, alternatively, inserting the optical fiber in a thin polymer membrane and fixing said membrane to the first semi-finished element. The membrane may or may not be reinforced and is produced beforehand so that it contains the optical fiber fixed along a predefined path. This advantageously allows the optical fiber to be adequately protected and the sensors to be correctly positioned with respect to the cylindrical element.

According to embodiments of the present invention, in step e), a layer of the second number of layers comprises reinforcing fibers having a 90° orientation with respect to the longitudinal axis of the cylindrical element.

According to embodiments of the present invention, the manufacturing method further comprises a step in which the protective housing is realized by means of 3D additive manufacturing process.

### Brief description of the drawings

The present invention will become clearer from the following detailed description, provided by way of a non-limiting example, to be read with reference to the accompanying drawings, in which:
- Figures 1a and 1b schematically show a cylindrical element for a damper device according to the present invention;
- Figures 2a and 2b schematically show a fork comprising a damper device with the cylindrical element shown in Figures 1a and 1b;
- Figure 3 schematically shows an optical fiber with a number of fiber sensors and a pre-connectorized end inserted inside a suitable protective housing according to an embodiment of the present invention;
- Figures 4a, 4b and 4c are three schematic views of the protective housing according to embodiments of the present invention;
- Figure 5 is a flow chart illustrating a method of manufacturing the cylindrical element of Figures 1a and 1b according to the present invention;
- Figure 6 schematically shows two half-molds used during the method of manufacturing the cylindrical element; and
- Figure 7 schematically shows a portion of the cylindrical element during manufacture thereof where the optical fiber is inserted between the layers of composite material.

### Detailed description of preferred embodiments of the invention

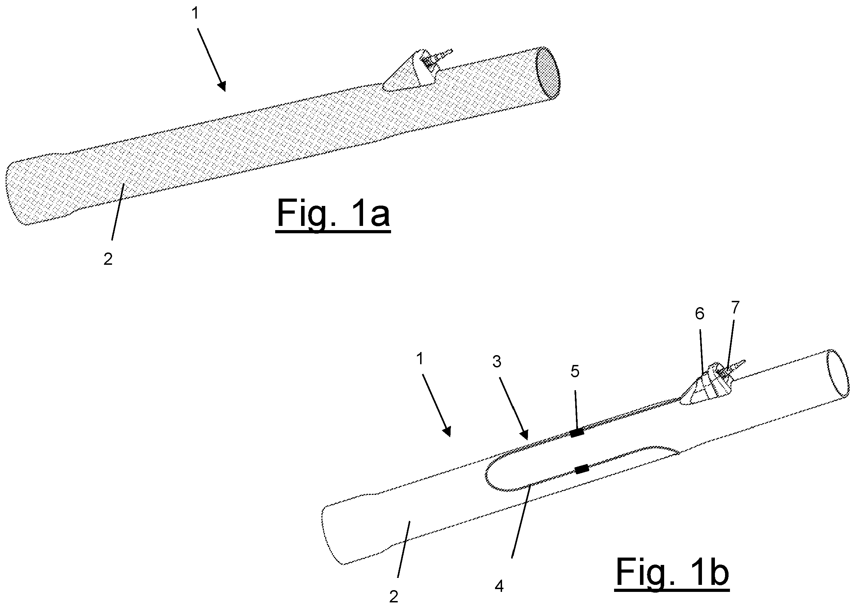

Figure 1a schematically shows a cylindrical element 1 for a damper device (or, more simply, damper) according to an embodiment of the present invention. According to the invention, the cylindrical element 1 has a cylindrical main body 2 made of composite material. The composite material used comprises a number of layers of composite material which are superimposed to form the cylindrical element, as will be described in greater detail below. The cylindrical element 1 may be a structural element of a damper, for example the fork tube.

Figure 1b schematically shows the cylindrical element 1 of Figure 1a without any outermost layers, so that the other components thereof according to the present invention may be seen.

In particular, the cylindrical element 1 further comprises, incorporated therein:
- a monitoring system 3 comprising at least one optical fiber 4 and configured to provide monitoring data indicating the state of the cylindrical element 1;
- a connection apparatus 7 connected to one end of the optical fiber 4 for connecting the optical fiber to an acquisition unit for acquiring the monitoring data; and
- a protective housing 6 configured to house said connection apparatus 7.

In the continuation of the present description and in the claims the term "incorporated" or the equivalent term "embedded", associated with the optical fiber (as well as the same term associated with the monitoring system) will be used to indicate that the optical fiber is integrated almost entirely (except for its end part, as will become clear from the description below) in the composite material, namely between two successive layers of said material. Furthermore, the term "incorporated" associated with the protective housing will indicate that this component is substantially entirely enclosed by the composite material, apart from, in some cases, a portion thereof in the region of a cap thereof, as will be described in detail hereinbelow. Finally, the term "incorporated" associated with the connection apparatus will indicate that this component is substantially fully housed inside the protective housing in turn enclosed by the composite material, as will be described in detail hereinbelow.

According to the embodiments of the present invention schematically shown for example in Figure 1b, the monitoring system 3 comprises a number of optical fiber sensors 5 which are configured to provide the monitoring data indicating the state of the cylindrical element 1.

The connection apparatus 7 may comprise an optical connector configured to connect the optical fiber, by means of a suitable optical-fiber data transmission cable, to an external data acquisition unit. Optionally, the connection apparatus 7 may comprise an adapter which allows the subsequent connection of the connector to a similar external connector for connection, by means of a cable, to the external acquisition unit. Said acquisition unit may be an optical interrogator. Alternatively, a miniaturized acquisition unit (not shown in the Figures) may be connected directly (namely wirelessly) to the connection apparatus 7 and may also be configured to transmit data to an external unit in wireless mode. **In** this case, the protective housing 6 may also house this miniaturized unit provided that it is made with components resistant to the polymerization temperatures of the composite material used, which are typically higher than 120°C.

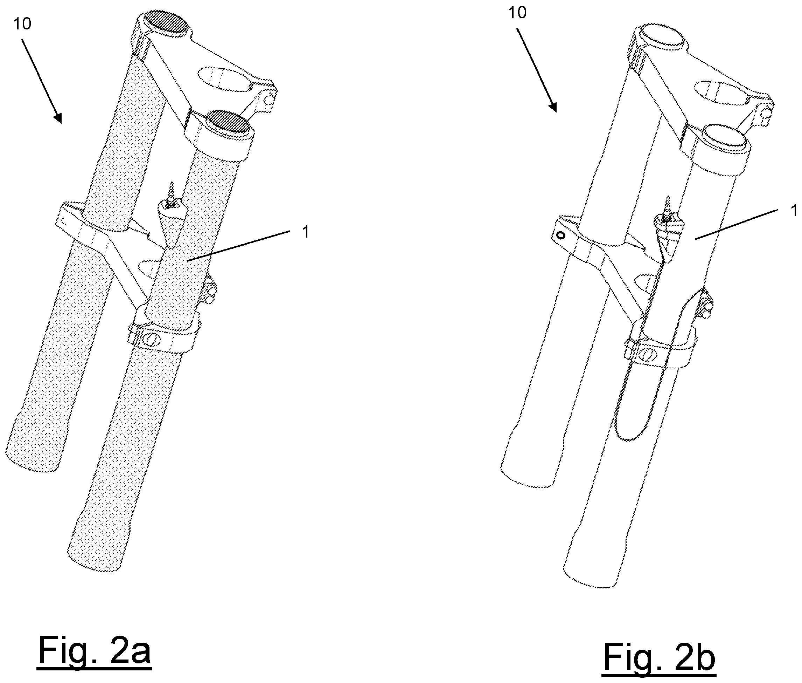

Figure 2a schematically shows a front fork 10 for a motorcycle comprising a damper in turn comprising the cylindrical element 1 according to the present invention. In particular, the cylindrical element 1 is the fork tube of the fork schematically shown in Figure 2a. Figure 2b schematically shows the fork 10 of Figure 2a in which the fork tube is without some of the outermost layers so that the monitoring system 3 and the protective housing 6 are visible.

As mentioned here above, the cylindrical element 2 is made using a composite material. The composite material used preferably comprises a polymer matrix of epoxy resin and carbon reinforcing fibers. In particular, the cylindrical element 1 is preferably made using a lay-up process, i.e., by superimposing layers of composite material with carbon reinforcing fibers organized in fabrics with predefined weaving styles or arranged in a single direction (unidirectional fiber layers), as will be discussed in detail below. Preferably, these layers are pre-impregnated with resin before being superimposed (pre-impregnated or pre-peg layers). The diameter of the body 2 of the cylindrical element 1 may be uniform or variable along the direction of its longitudinal axis. The cross-section of the body 2 of the cylindrical element 1 may be substantially circular, as shown by way of example in the Figures, or have a different shape, which may also be non-uniform along the axis of the body 2. For example, the forks of the motorcycles have a diameter in the top part which is smaller than in the bottom part for structural reasons and in order to facilitate assembly. The dimensions of the cylindrical element, when used in a fork, are very variable depending on the type of vehicle: for example, for a mountain bike the diameter may be from 1 cm to 5 cm, for an ultra-light aircraft it may be 5-10 cm, while for a medium to large size airliner it may be as much as 30-40 cm.

The monitoring system 3, in the embodiment shown in the Figures, comprises an optical fiber 4, which is inserted between two successive layers of the composite material during the manufacture of the cylindrical element 1 so as to be embedded therein. The process of positioning the optical fiber 4 between the layers of composite material will be described below. The optical fiber 4 is preferably a single-mode optical fiber made of pure silica with a diameter of the cladding which is standard (125 microns) or small (for example 80 or 50 microns or less). The optical fiber is preferably with a high numerical aperture, namely with a diameter of the core less than 9 microns (typically 5-6 microns or less).

For example, the optical fiber 4 is an optical fiber with a diameter of the cladding equal to 80 microns with a high numerical aperture. These features allow the invasiveness of the optical fiber in the cylindrical element to be reduced (owing to the smaller diameter) and limit the degree of attenuation of the optical signal induced by the reinforcing fibers of the composite material. However, alternatively, other types of optical fibers may be used, for example multi-mode optical fibers or birefringent optical fibers or optical fibers made of other materials provided that they are able to withstand the polymerization temperatures of the composite material.

The optical fiber 4 preferably comprises a coating of material resistant to high temperatures, i.e. able to withstand the polymerization cycles of the composite material (which, as mentioned above, typically occur at temperatures higher than 120°C) and able to ensure a high degree of adhesion to the resin of the pre-impregnated layers between which the optical fiber is inserted, in order to optimize the performance of the sensors, which will be described here below, in terms of detection sensitivity. The material of the coating of the optical fiber may be for example a polymer material (for example a polyacrylate or a polyamide) or a hybrid material (for example, Ormocer^{®} - Organic Modified Ceramics) or a metallic material. The optical fiber 4 for example has an Ormocer^{®} coating which ensures a resistance to temperatures higher than 200°C.

The sensors 5 are preferably deformation sensors which are inscribed in the optical fiber 4 in predetermined positions suitable for detecting the deformations along the longitudinal axis of the optical fiber 4. The sensors 5 are preferably point deformation sensors of the FBG (Fiber Bragg Grating) type. The inventors have noted that this type of sensor advantageously allows precise disturbance-free measurements to be taken in real time. Moreover, the inventors have noted that for this type of sensors, considering the example of application mentioned above, the acquisition unit for acquiring the detected signals can be easily installed on the motorcycle owing to the small dimensions, the resistance to mechanical stresses, the low power supply levels and the ease of integration with a CAN-bus system which may be present on the motorcycle. However, alternatively or in addition, other measurement techniques based on optical fiber may be implemented in order to detect the state of health of the cylindrical element according to the present invention, including techniques based on scattering (Reyleigh, Brillouin or Raman scattering), such as OTDR (Optical Time Domain Reflectometry) measurement techniques, or techniques based on interferometers (Fabry-Perot, Sagnac, Mach-Zehnder or Pohl interferometers).

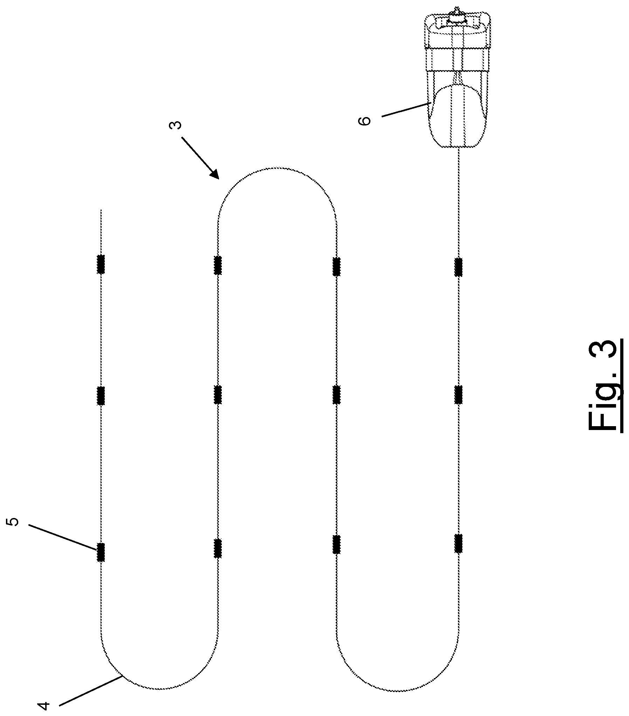

Figure 3 schematically shows the optical fiber 4 with the sensors 5 arranged in predetermined positions in the fiber. Figure 3 also shows one end of the fiber 4 connected to the connection apparatus 7 (only an end part of which is shown) housed inside the protective housing 6. In the embodiment shown in Figure 3, the fiber 4 comprises twelve sensors 5. The position of the sensors in the cylindrical element 1 is designed to ensure the identification of the loads acting on the cylindrical element and to monitor its state of health during use.

Preferably, the sensors 5 are aligned along the longitudinal axis of the cylindrical element 1 so as to detect the longitudinal deformation of the said element. Considering in fact the example of application mentioned above, the main stresses acting on the fork 10 are the flexural stresses around the two transverse axes, which can be both measured with the longitudinal deformation. As will be described in greater detail below, the optical fiber 4 is therefore deposited along a predefined path so as to position the sensors 5 in predetermined positions and align them with the desired direction of measurement. The predetermined positions of the sensors 5 allow the reconstruction of the internal forces applied to the fork 10 during operation thereof and, at the same time, monitoring of the state of health of the fork 10 during operation thereof. The dimensions of the sensors 5 are preferably between 1 mm and 15 mm.

In order to minimize the invasiveness of the optical fiber in the cylindrical element 1, the optical fiber 4 is preferably already connected at one end by means of the connection apparatus 7 which, in the embodiment shown in the Figures, comprises, as mentioned above, an optical connector 8. The connection apparatus 7 shown in the Figures preferably also comprises an adapter 9 which allows the subsequent connection of the optical connector 8 to a similar one which an external fiber may have at its end for connection to an external acquisition unit. According to the embodiments of the present invention, the connection apparatus 7, comprising the optical connector 8 and the adapter 9, is inserted inside the protective housing 6 before or during the positioning of the optical fiber 4 between the layers of the composite material.

For example, the connector 8 may be a Mini AVIM^{®} connector produced by Diamond SA, Switzerland, and the adapter may be a Mini AVIM^{®}/Mini AVIM^{®} adapter.

The protective housing 6 is preferably made of polymeric material. According to a preferred embodiment of the present invention, the protective housing 6 is made by means of a 3D printing additive manufacturing process, for example using the FDM (Fused Deposition Modeling) technique. The resin used in this process may be, for example, an Ultem^{®} 1010 resin. The protective housing 6 is positioned on the outer surface of the body 2 of the cylindrical element 1 during manufacture of the said element, as will be described in greater detail below. It should be noted that the protective housing 6 may also be made using a different material, for example a metallic material, using for example a machining process with stock removal.

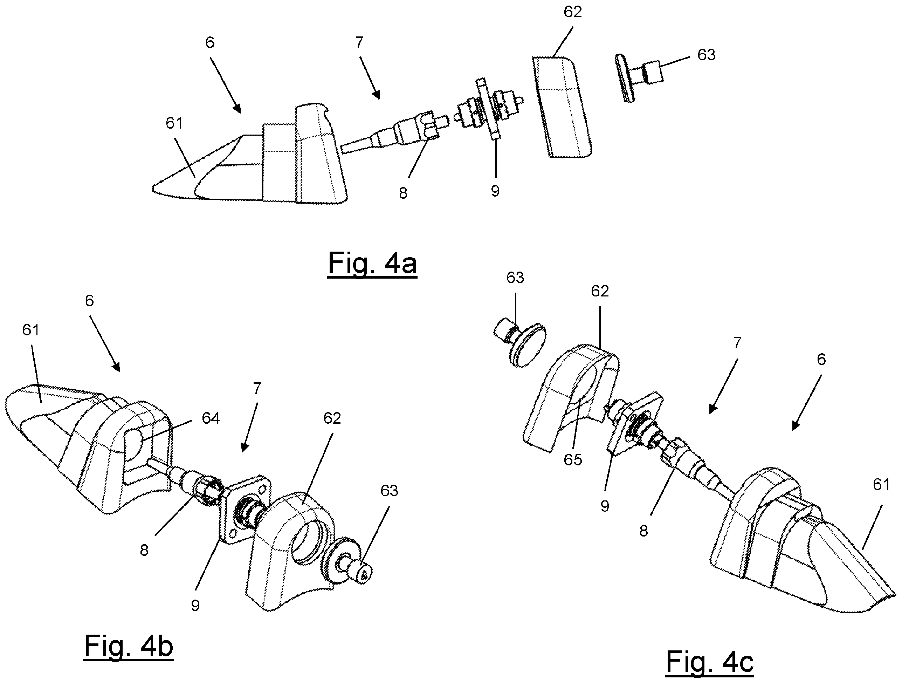

Figures 4a, 4b and 4c are three schematic views of the protective housing 6, the optical connector 8 and the adapter 9 according to an embodiment of the present invention. The external geometry of the protective housing 6 (in particular of a body 61 thereof) shown in the Figures is shown purely by way of example. It must however be designed in order to minimize the volume and the weight of the protective housing 6 on the body 2 of the cylindrical element 1. The protective housing 6 may be provided with clefts in the transverse direction, such as those schematically shown in Figures 4a-4c, in order to improve the solidity of the said protective housing 6 on the body 2 of the cylindrical element 1. These clefts may in fact be configured to receive a layer of composite material which, during manufacture, is positioned on top of the protective housing 6 and the reinforcing fibers of which may be oriented circumferentially with respect to the axis of the cylindrical element 2, namely at 90° with respect to said axis. As already mentioned, the steps of the manufacturing process will be illustrated more clearly below.

The surface of the body 61 of the protective housing 6 which is positioned on the body 2 of the cylindrical element 1 reproduces the curvature of the body 2 of the cylindrical element 1 in the section where the protective housing is applied, so as to facilitate the adhesion of the protective housing 6 to the layer of composite material of the cylindrical element 1 applied before positioning of the protective housing 6. Internally, the form of the protective housing 6 reproduces the form of the optical connector 8 used and that of the adapter 9. In this way in fact it is possible to hermetically seal the protective housing 6 and to ensure that the optical connector 8 remains isolated from the resin of the composite material which, during the polymerization process, otherwise could reach it and make it unusable.

The protective housing 6 therefore comprises an at least partially hollow body 61 and a cap for closing this body. The removal of this cap allows a portion of the connection apparatus 7 (for example the adapter 9) to be exposed, for the connection of external devices and cables. In the embodiment shown in Figures 4a-4c, the protective housing 6 therefore comprises the at least partially hollow body 61, a main cap 62 and a secondary cap 63. The body 61 comprises a through-hole 64 which allows the passage of the optical fiber. In the embodiment shown in the Figures, the body 61 also comprises, in the region of the main hole 64, a recess configured to house the adapter 9 schematically shown in Figures 4a-4c. The main cap 62 has preferably a central hole 65 which, when the main cap 62 is mounted on the body 61, allows exposure of a portion of the connection apparatus 7 (in the case of the embodiment shown in the Figures, the end portion of the adapter 9) useful for connecting external devices and cables. The secondary cap 63 is configured to close the hole of the main cap. The removal of the secondary cap 63 therefore allows the end part of the adapter to be exposed for connection of a possible device (such as a fault locator) which may be used to verify the intact condition of the optical fiber 4 during the steps for manufacture of the cylindrical element.

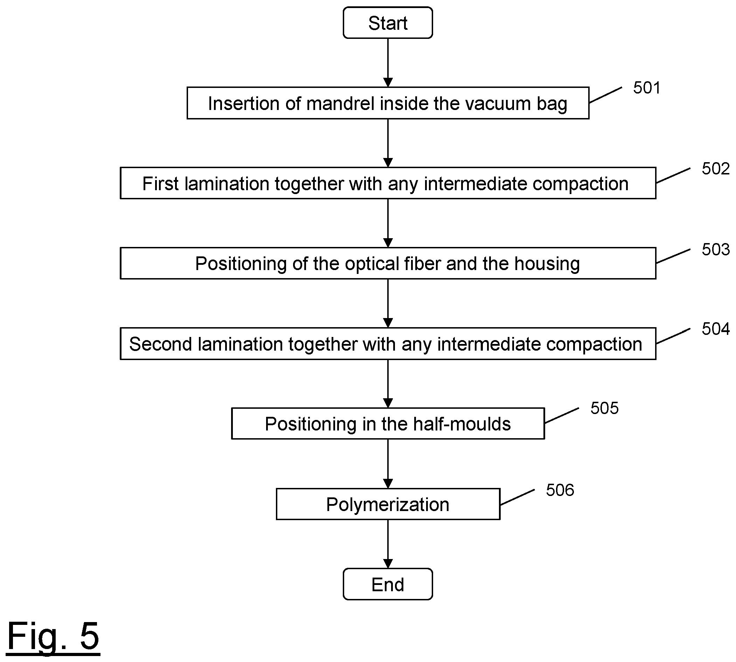

Figure 5 is a flow chart illustrating the manufacturing method applied by the inventors for the manufacture, in particular, of a prototype of the cylindrical element according to the present invention for a fork tube of a damper device present in the front fork of a motorcycle. This however does not limit the scope of the present invention since entirely similar procedures may be applied for the manufacture of other types of composite-material elements (i.e., not necessarily the fork tube of a damper of a motorcycle fork) provided with a monitoring system based on optical fiber and a protective housing for the optical fiber connection apparatus as described above.

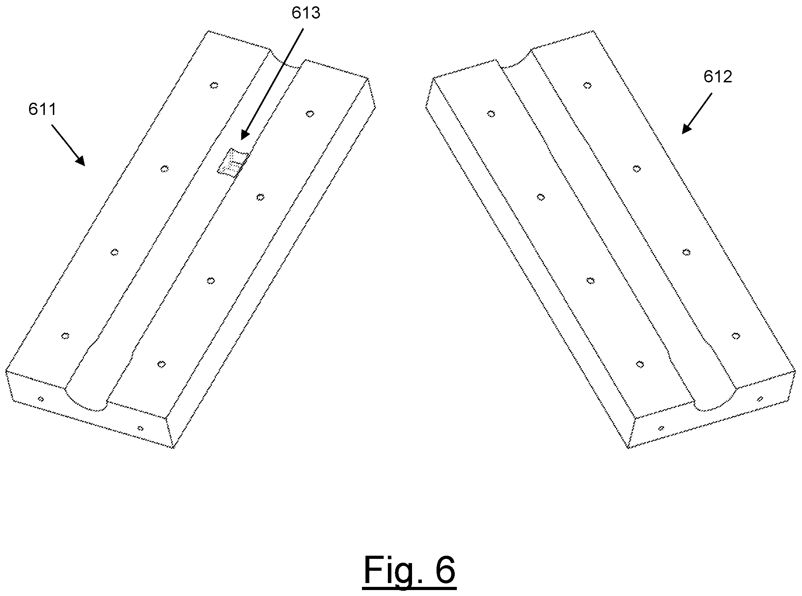

The manufacturing method is based on an autoclave forming process which involves the use of a female mold consisting of two half-molds 611, 612. Figure 6 schematically shows the two half-molds 611 and 612 for the manufacture of the cylindrical element shown in Figures 1a and 1b. One of the two half-molds comprises a seat 613 especially created to insert the protective housing once it as been incorporated between the layers of composite material. The female mold reproduces the external geometry of the cylindrical element. The two half-molds 611, 612 may also be made of composite material.

The manufacturing method also involves the use of a mandrel required in order to perform the lay-up operations which will be described below.

Moreover, the process involves a preliminary step of assembling the monitoring system with the connection apparatus and the protective housing.

In particular, it should be noted that the protective housing must ensure protection of the connector and the adapter from the resin of the composite material which, during the following polymerization step, may become extremely fluid. The protection against the resin is obtained making the cavity of the protective housing fluid-tight by means of gluing of the main cap and, if necessary, the secondary cap to the body of the protective housing and by means of the tolerance fit between the optical connector and the internal walls of the protective housing, in order to seal off the hole through which the optical fiber passes. The operations for inserting the connector and the adapter inside the protective housing are as follows: connecting the end of the optical connector to one end of the optical fiber, connecting the adapter to the optical connector, inserting the optical fiber in the through-hole present in the body of the protective housing and inserting the optical connector and the adapter in position inside the protective housing. Then the main cap is glued to the body of the protective housing. Finally, a release agent (for example Teflon tape) is applied onto the outer surface of the cap which will allow easy separation of the main cap from the cylindrical element once the main cap and, if necessary, the secondary cap must be removed in order to connect the optical fiber to an external acquisition unit.

Considering again the manufacturing method, in step 501 the mandrel is lined with a tubular vacuum bag followed by the consumable materials required for production, as is known in the case of autoclave forming technology: for example, first an aeration filter cloth, which allows extraction, from the vacuum bag, of the air and any gases produced during the process, then a microperforated Teflon release film, which allows the article to be separated from the aeration filter cloth and the bag.

In step 502, the process involves a first lay-up with the deposition of a first number of layers of composite material on the mandrel. The layers are pre-impregnated. Each layer comprises reinforcing fibers with a predetermined orientation. The sequence for deposition of the layers is also predetermined.

It should be noted that the choice of the number, the type of material (with fibers made of fabric or with a unidirectional orientation) and the sequence of the layers of composite material are defined following a design process which, for example in the example of the application described above, takes account of the following:
- the overall rigidity of the component in which the cylindrical element must be used (namely the aforementioned fork);
- the resistance to loads during use and for the technology verification tests.

In order to obtain particular variable rigidity conditions (for example, an increase in the rigidity in the direction in which the transverse deformations are to be minimized) it is possible to vary locally the type of materials applied or the lamination sequence. The design process relating to the prototype realized by the inventors will not be described below since it is not relevant for the purposes of the present invention.

By way of example, the cylindrical element according to an embodiment of the present invention may be made by using, as already mentioned, pre-impregnated layers of composite material with carbon-fiber reinforced thermosetting polymer matrix which ensures an optimum mechanical performance. However, in addition to the carbon fiber, other fibers such as glass, aramid or metal boron fibers may be used depending on the type of device which is manufactured and its application.

Again by way of example, the cylindrical element of the prototype made by the inventors was made using the lamination sequence indicated in Table 1 below:

**Table 1**

| Layer number | Type | Orientation | Thickness [mm] |
|---|---|---|---|
| 1 | Woven 230 | 45° | 0.25 |
| 2 | UD 110 | 0° | 0.13 |
| 3 | UD 110 | 0° | 0.13 |
| 4 | UD 110 | 0° | 0.13 |
| 5 | UD 110 | 90° | 0.13 |
| 6 | Woven 230 | 45° | 0.25 |
| 7 | Woven 230 | 45° | 0.25 |

In the table, the term "Woven 230" indicates a 2x2 twill weave fabric made of 3k carbon fiber, areal weight of 230 g/m², resin content 42%, and the abbreviation "UD 110" indicates a unidirectional fabric, made of 3k carbon fiber, areal weight of 110 g/m², resin content 37%.

After deposition of the first layer, the method may comprise a first intermediate compaction by means of a thermo-retractable tape. Thereafter the method may comprise other intermediate compaction operations every two layers.

It should also be noted that the lamination sequence illustrated here is described by way of example. The inventors have in fact designed and applied this sequence for the manufacture of the prototype of a cylindrical element for the front fork of a motorcycle, as already indicated above. However, the procedure described may be applied to any other lamination sequence.

Considering again step 502 of the flow diagram in Figure 5, the first lay-up terminates after deposition of the layer on top of which the optical fiber with the sensors incorporated in it is arranged. This layer preferably consists of unidirectional fibers. Moreover, the fibers of this layer have preferably the same orientation as the optical fiber sensors (namely along the axis of the optical fiber at the positions of the sensors). This advantageously avoids undesirable local stresses with the risk of malfunction of the sensors. At the end of step 502, an article which will be indicated also as the first semi-finished cylindrical element is obtained.

At this point, at step 503, the method involves positioning the optical fiber and the protective housing containing the optical connector and the adapter on the last deposited layer of the first semi-finished cylindrical element. This positioning step is preferably performed by positioning firstly the protective housing (comprising the body 61 with the optical connector and the adapter and the main cap 62 schematically shown in Figures 4a-4c). The protective housing is fastened to the deposited layer by means of, for example, a clamp. The inventors, in particular, have specifically developed a clamp for fastening the protective housing to the layer during the manufacture of the aforementioned prototype.

Then the process involves positioning the optical fiber along a predetermined path which allows the sensors to be positioned in the predetermined positions. For the positioning of the fiber in the said prototype, the inventors have developed a specially designed template which was fitted onto the article. The positioning of the sensors is performed using for example markers provided beforehand on the optical fiber at the position of the sensors. The markers are made for example using a special paint which does not reduce the adhesion of the optical fiber to the composite material. During this step, the protective housing is not closed with the secondary cap so that an operator may access the adapter during the subsequent steps of the process in order to connect the optical fiber to an external device for checking the correct operation of the sensors (for example a fault locator, as already mentioned above).

Preferably at this point the optical fiber is fixed to the underlying layer. This may be performed for example using small-size fixing rectangles of pre-impregnated composite material which are applied onto the optical fiber. The material used is preferably the same material used for the last deposited layer, in order to ensure minimum invasiveness. The fixing rectangles ensure in fact temporary fixing of the optical fiber until the next layer is deposited.

Another example consists in inserting the optical fiber thanks to a thin polymer membrane, which may or may not be reinforced and which has been produced beforehand so as to contain the optical fiber fixed along a predefined path. This advantageously allows the optical fiber to be suitably protected and the sensors to be correctly positioned with respect to the cylindrical element.

At this point, in step 504, the process involves a second lamination operation comprising the deposition of the remaining layers of the selected lamination sequence. It should be noted that all the layers deposited on top of the optical fiber are suitably cut so that the optical fiber may be passed beyond the said layers (namely across their thickness).

One of the layers deposited on top of the optical fiber (for example layer number 5 in the lamination sequence indicated by way of example in Table 1) comprises reinforcing fibers having a 90° orientation with respect to the longitudinal axis of the cylindrical element. In this way, said layer may form a kind of "bandage" superimposed on the protective housing, which ensures a greater adhesion of the protective housing to the body of the cylindrical element. During this step, moreover, the secondary cap is positioned so as to close the protective housing and is sealed with resin.

At the end of step 504, a new article, which will be referred to also as the second semi-finished cylindrical element, is obtained.

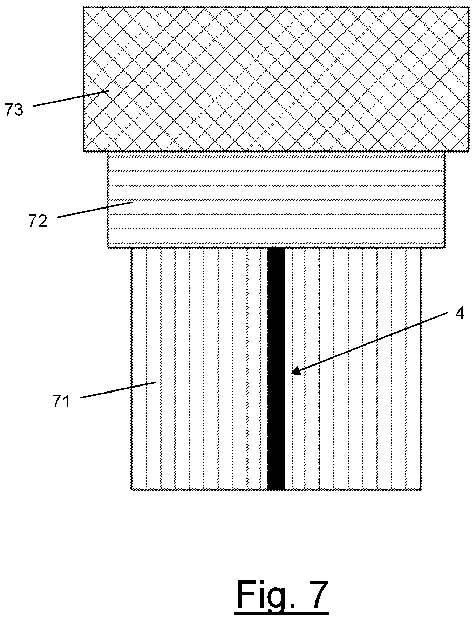

Figure 7 schematically shows a portion of the article in which a section of the optical fiber 5 is visible between the layers of the composite material. In particular, Figure 7 shows the layer on which the fiber is positioned (this layer is indicated by the reference number 71 in the Figure) with the reinforcing fibers oriented in the same direction as the optical fiber sensors (namely along the axis of the optical fiber at the positions of the sensors). Figure 7 also shows the layer deposited on top of the optical fiber 4 with reinforcing fibers oriented at 90° with respect to the longitudinal axis of the cylindrical element (this layer is indicated by the reference number 72). Finally, Figure 7 shows a further layer, indicated by the reference number 73, with the fabric reinforcing fibers.

In step 505 the article is placed in the two half-molds 611 and 612 - schematically shown in Figure 6 - which are clamped together. During this step, the protective housing incorporated in the composite material is inserted into the seat suitably formed in one of the half-molds.

At the end of the lay-up operations and after closing the two half-molds, the internal vacuum bag is joined and sealed together with an external vacuum bag (which encloses the whole assembly) so that the so-called "double bag" technique is used to ensure that the pressure of the air in the autoclave acts both on the outside of the two half-molds and on the inside (between the internal mandrel and the internal vacuum bag) so as to compact the layers radially, from the inside of the tube towards the half-molds.

At step 506, the process involves closing of the double vacuum bag and polymerization. Polymerization is performed using a standard procedure which will not be further described.

Considering the example of the fork described above, following the polymerization the fork tube is assembled with the other components of the fork and only subsequently are the main cap and secondary cap of the protective housing removed in order to allow the connection of the optical fiber to the acquisition unit installed on-board the motorcycle.

The present invention offers numerous advantages, some of which have already been discussed here above. In particular, as regards the example of the application described, the cylindrical element made of composite material (e.g., the fork tube and/or the stem of the damper) ensures both a reduction in the mass for the same rigidity of the said metal structure and the possibility of varying locally the rigidity of the cylindrical element modifying the type of material (namely the reinforcing fibers) and/or the lamination sequence. The presence of the monitoring system as described ensures efficient monitoring of the state of use and health of the component (HUMS), which is particularly effective if optical fibers and optical fiber sensors are used, owing to their limited invasiveness in the cylindrical element. The protective housing for connection of the optical fiber to the acquisition unit is designed to be incorporated in the cylindrical element directly during the process for production thereof, making the monitoring system suitable for "plug and play" with the original components and limiting the invasiveness thereof in the said production process.

## Claims

1. A cylindrical element (1) for a damper device comprising:
- a cylindrical body (2) made of a composite material;
- a monitoring system (3) configured to provide monitoring data indicating the state of said cylindrical element (1), said monitoring system (3) comprising an optical fiber (4) connected, at one end, to a connection apparatus (7) for connecting said optical fiber to an acquisition unit for acquiring said monitoring data;
- a protective housing (6) configured to house at least said connection apparatus (7);
wherein said monitoring system (3) and said protective housing (6) are embedded in said composite material.

2. The cylindrical element (1) according to claim 1, wherein said monitoring system (3) comprises a number of deformation sensors in the optical fiber (4).

3. The cylindrical element (1) according to claim 2, wherein said sensors (5) are FBG type sensors.

4. The cylindrical element (1) according to any one of the preceding claims, wherein said connection apparatus (7) comprises an optical connector (8) and an adapter (9).

5. The cylindrical element (1) according to any one of the preceding claims, wherein said protective housing (6) comprises an at least partially hollow body (61), a main cap (62) and a secondary cap (63), wherein said main cap (62) has a hole (65) for exposing a portion of the connection apparatus (7) for connecting an external device or cable, and wherein said secondary cap (63) is configured to close said hole (65).

6. The cylindrical element (1) according to any one of the preceding claims, wherein said protective housing (6) is made of polymeric material.

7. The cylindrical element (1) according to any one of the preceding claims, wherein said protective housing (6) is also configured to house said acquisition unit in miniaturized form.

8. A damper device comprising a cylindrical element (1) according to any one of the preceding claims.

9. A method of manufacturing a cylindrical member (1) for a damper device comprising the steps of:
a) providing a monitoring system (3) for said cylindrical element (1), said monitoring system (3) being configured to provide monitoring data indicating the state of said cylindrical element (1) and comprising an optical fiber (4), wherein said monitoring system (3) is connected, at one end of said optical fiber (4), to a connection apparatus (7) for connecting said optical fiber (4) to an acquisition unit for acquiring said monitoring data;
b) assembling said monitoring system (3), connected to said connection apparatus (7), with a protective housing (6) configured to house at least said connection apparatus (7);
c) depositing on a cylindrical mandrel a first number of layers of composite material to obtain a first semi-finished cylindrical element;
d) positioning said monitoring system (3), connected to said connection apparatus (7) and assembled with said protective housing (6), on the first semi-finished cylindrical element;
e) depositing a second number of layers of composite material to obtain a second semi-finished cylindrical element wherein said monitoring system (3), connected to said connection apparatus (7), and said protective housing (6) are embedded in said composite material; and
f) carrying out a polymerization of said second semi-finished cylindrical element to obtain said cylindrical element.

10. The manufacturing method according to claim 9, further comprising a step in which said protective housing (6) is made by means of a 3D printing additive manufacturing process.

## Patentansprüche

1. Zylindrisches Element (1) für eine Dämpfervorrichtung, umfassend:
- einen zylindrischen Körper (2), der aus einem Verbundmaterial hergestellt ist;
- ein Überwachungssystem (3), das dazu konfiguriert ist, Überwachungsdaten bereitzustellen, die den Zustand des zylindrischen Elements (1) angeben, wobei das Überwachungssystem (3) eine optische Faser (4) umfasst, die an einem Ende mit einer Verbindungseinrichtung (7) zum Verbinden der optischen Faser mit einer Erfassungseinheit zum Erfassen der Überwachungsdaten verbunden ist;
- ein schützendes Gehäuse (6), das dazu konfiguriert ist, mindestens die Verbindungseinrichtung (7) aufzunehmen;
wobei das Überwachungssystem (3) und das schützende Gehäuse (6) in dem Verbundmaterial eingebettet sind.

2. Zylindrisches Element (1) nach Anspruch 1, wobei das Überwachungssystem (3) eine Anzahl von Deformationssensoren in der optischen Faser (4) umfasst.

3. Zylindrisches Element (1) nach Anspruch 2, wobei die Sensoren (5) Sensoren vom Typ FBG sind.

4. Zylindrisches Element (1) nach einem der vorhergehenden Ansprüche, wobei die Verbindungseinrichtung (7) einen optischen Verbinder (8) und einen Adapter (9) umfasst.

5. Zylindrisches Element (1) nach einem der vorhergehenden Ansprüche, wobei das schützende Gehäuse (6) einen mindestens teilweise hohlen Körper (61), eine Hauptkappe (62) und eine Nebenkappe (63) umfasst, wobei die Hauptkappe (62) ein Loch (65) zum Offenlegen eines Teils der Verbindungseinrichtung (7) aufweist, um eine externe Vorrichtung oder ein Kabel zu verbinden, und wobei die Nebenkappe (63) dazu konfiguriert ist, das Loch (65) zu schließen.

6. Zylindrisches Element (1) nach einem der vorhergehenden Ansprüche, wobei das schützende Gehäuse (6) aus einem Polymermaterial hergestellt ist.

7. Zylindrisches Element (1) nach einem der vorhergehenden Ansprüche, wobei das schützende Gehäuse (6) auch dazu konfiguriert ist, die Erfassungseinheit in miniaturisierter Form aufzunehmen.

8. Dämpfervorrichtung, umfassend ein zylindrisches Element (1) nach einem der vorhergehenden Ansprüche.

9. Verfahren zum Herstellen eines zylindrischen Bauteils (1) für eine Dämpfervorrichtung, die folgenden Schritte umfassend:
a) Bereitstellen eines Überwachungssystems (3) für das zylindrische Element (1), wobei das Überwachungssystem (3) dazu konfiguriert ist, Überwachungsdaten bereitzustellen, die den Zustand des zylindrischen Elements (1) angeben, und eine optische Faser (4) umfasst, wobei das Überwachungssystem (3) an einem Ende der optischen Faser (4) mit einer Verbindungseinrichtung (7) zum Verbinden der optischen Faser (4) mit einer Erfassungseinheit zum Erfassen der Überwachungsdaten verbunden ist;
b) Zusammenfügen des Überwachungssystems (3), das mit der Verbindungseinrichtung (7) verbunden ist, mit einem schützenden Gehäuse (6), das dazu konfiguriert ist, mindestens die Verbindungseinrichtung (7) aufzunehmen;
c) Auftragen, auf einen zylindrischen Dorn, einer ersten Anzahl von Schichten von Verbundmaterial, um ein erstes halbfertiges zylindrisches Element zu erhalten;
d) Positionieren des Überwachungssystems (3), das mit der Verbindungseinrichtung (7) verbunden und mit dem schützenden Gehäuse (6) zusammengefügt ist, auf dem ersten halbfertigen zylindrischen Element;
e) Auftragen einer zweiten Anzahl von Schichten von Verbundmaterial, um ein zweites halbfertiges zylindrisches Element zu erhalten, wobei das mit der Verbindungseinrichtung (7) verbundene Überwachungssystem (3) und das schützende Gehäuse (6) in dem Verbundmaterial eingebettet sind; und
f) Durchführen einer Polymerisierung des zweiten halbfertigen zylindrischen Elements, um das zylindrische Element zu erhalten.

10. Herstellungsverfahren nach Anspruch 9, ferner umfassend einen Schritt, in dem das schützende Gehäuse (6) mittels eines additiven Fertigungsprozesses des 3D-Druckens hergestellt ist.

## Revendications

1. Élément cylindrique (1) pour un dispositif d'amortissement comprenant :
- un corps cylindrique (2) fait d'un matériau composite ;
- un système de surveillance (3) configuré pour fournir des données de surveillance indiquant l'état dudit élément cylindrique (1), ledit système de surveillance (3) comprenant une fibre optique (4) connectée, à une extrémité, à un appareil de connexion (7) pour connecter ladite fibre optique à une unité d'acquisition pour acquérir lesdites données de surveillance ;
- un logement protecteur (6) configuré pour loger au moins ledit appareil de connexion (7) ;
dans lequel ledit système de surveillance (3) et ledit logement protecteur (6) sont intégrés dans ledit matériau composite.

2. Élément cylindrique (1) selon la revendication 1, dans lequel ledit système de surveillance (3) comprend un certain nombre de capteurs de déformation dans la fibre optique (4).

3. Élément cylindrique (1) selon la revendication 2, dans lequel lesdits capteurs (5) sont des capteurs de type FBG.

4. Élément cylindrique (1) selon l'une quelconque des revendications précédentes, dans lequel ledit appareil de connexion (7) comprend un connecteur optique (8) et un adaptateur (9).

5. Élément cylindrique (1) selon l'une quelconque des revendications précédentes, dans lequel ledit logement protecteur (6) comprend un corps au moins partiellement creux (61), un couvercle principal (62) et un couvercle secondaire (63), dans lequel ledit couvercle principal (62) présente un trou (65) pour exposer une partie de l'appareil de connexion (7) pour connecter un dispositif ou un câble externe, et dans lequel ledit couvercle secondaire (63) est configuré pour fermer ledit trou (65).

6. Élément cylindrique (1) selon l'une quelconque des revendications précédentes, dans lequel ledit logement protecteur (6) est fait d'un matériau polymère.

7. Élément cylindrique (1) selon l'une quelconque des revendications précédentes, dans lequel ledit logement protecteur (6) est également configuré pour loger ladite unité d'acquisition sous une forme miniaturisée.

8. Dispositif d'amortissement comprenant un élément cylindrique (1) selon l'une quelconque des revendications précédentes.

9. Procédé de fabrication d'un élément cylindrique (1) pour un dispositif d'amortissement comprenant comme étapes :
a) la fourniture d'un système de surveillance (3) pour ledit élément cylindrique (1), ledit système de surveillance (3) étant configuré pour fournir des données de surveillance indiquant l'état dudit élément cylindrique (1) et comprenant une fibre optique (4), dans lequel ledit système de surveillance (3) est connecté, à une extrémité de ladite fibre optique (4), à un appareil de connexion (7) pour connecter ladite fibre optique (4) à une unité d'acquisition pour acquérir lesdites données de surveillance ;
b) l'assemblage dudit système de surveillance (3), connecté audit appareil de connexion (7), avec un logement protecteur (6) configuré pour loger au moins ledit appareil de connexion (7) ;
c) le dépôt sur un mandrin cylindrique d'un premier nombre de couches de matériau composite pour obtenir un premier élément cylindrique semi-fini ;
d) le positionnement dudit système de surveillance (3), connecté audit appareil de connexion (7) et assemblé avec ledit logement protecteur (6), sur le premier élément cylindrique semi-fini ;
e) le dépôt d'un deuxième nombre de couches de matériau composite pour obtenir un deuxième élément cylindrique semi-fini dans lequel ledit système de surveillance (3), connecté audit appareil de connexion (7), et ledit logement protecteur (6) sont intégrés dans ledit matériau composite ; et
f) la réalisation d'une polymérisation dudit deuxième élément cylindrique semi-fini pour obtenir ledit élément cylindrique.

10. Procédé de fabrication selon la revendication 9, comprenant en outre une étape dans laquelle ledit logement protecteur (6) est fait au moyen d'un procédé de fabrication additive par impression 3D.
